Europäisches Patentamt

European Patent Office

Office européen des brevets

(19)

(11) EP 0 372 978 B1

(12) **EUROPEAN PATENT SPECIFICATION**

| | |
|---|---|
| (45) Date of publication and mention of the grant of the patent: **24.01.1996 Bulletin 1996/04** | (51) Int Cl.6: **C08L 51/04**, C08F 279/04 // C08J7:04, C08L51:04, C08L25:12 |

(21) Application number: 89312800.9

(22) Date of filing: 08.12.1989

(54) **ABS resin compositions and molded articles thereof having improved coating performances**

Zusammensetzungen von ABS und geformte Gegenstände davon mit verbesserter Beschichtungsfähigkeit

Compositions de résine ABS et articles moulés à partir de celles-ci aptes à être peints

| | |
|---|---|
| (84) Designated Contracting States: **DE FR GB IT SE** | (72) Inventors:<br>• **Nanasawa, Atsushi**<br>  **Kurashiki-shi (JP)**<br>• **Umeda, Noriaki**<br>  **Kurashiki-shi (JP)** |
| (30) Priority: **09.12.1988 JP 310058/88**<br>          **22.03.1989 JP 67675/89** | |
| (43) Date of publication of application: **13.06.1990 Bulletin 1990/24** | (74) Representative: **Blake, John Henry Francis et al London WC1V 6SE (GB)** |
| (73) Proprietor:<br>**Asahi Kasei Kogyo Kabushiki Kaisha Osaka-shi, Osaka 530 (JP)** | (56) References cited:<br>**EP-A- 0 096 555**<br><br>• **PATENT ABSTRACTS OF JAPAN, vol. 9, no. 184, 30th July 1985; & JP-A-60 051 704**<br>• **WPIL, FILE SUPPLIER, accession no. 86-269575 [41], Derwent Publications Ltd, London, GB; & JP-A-61 197 612** |

**Description**

BACKGROUND OF THE INVENTION

FIELD OF THE INVENTION

This invention relates to a resin composition having excellent appearance and coating performances.

RELATED ART

Resin compositions prepared by graft copolymerizing a rubbery polymer with a vinyl cyanide compound and an aromatic vinyl compound, for example, an ABS resin, are widely used because of their excellent processability and mechanical strengths. However, when a polymer of a diene compound is used as the rubbery polymer of a resin composition, this type of resin composition is characterized with being insufficient in weather resistance, and therefore a product of the resin composition must sometimes be coated. Further, it is often coated for designing reasons.

If a molded resin article is coated with a coating material, small cracks can be formed on the surface of the molded resin article when it is contacted with the coating material or thinner, particularly when the coating material and the thinner are not appropriate or the conditions of coating work is not appropriate, for the article to be coated. Such cracks can absorb the coating material and, even if absorption of the coating material does not take place, the gloss vividness of the coating surface is deteriorated. When a coated resin article having such an inferior appearance is used next to a coated metallic article as in the case of interior and exterior coated parts of automobiles and motorcycles, the commercial value of the whole article is deteriorated.

It has been determined that the defective appearance of coated resin articles is attributable to the residual strain remaining in the molded resin. Accordingly, this phenomenon can be eliminated by annealing the molded article before it is coated. However, the annealing of large-sized articles requires large equipment, and increases the number of working steps which greatly deteriorates the productivity. Although coating materials and thinners which do not permeating the molded resins may be usable, their use is generally undesirable because a coating film produced therefrom is low in adhesive strength.

An attempt to solve the problem of defective appearance of coated resin article by the technique of improving the resin composition, can be referred to in Japanese Patent Application Kokai (Laid-Open) No. 54-94547. According to this technique, there is provided a resin composition prepared by compounding a rubbery polymer/vinyl cyanide compound/aromatic vinyl compound copolymer wherein the content of vinyl cyanide compound which is chemically grafted onto a rubbery polymer is 32 to 37% by weight, with a vinyl cyanide compound/aromatic vinyl compound copolymer wherein the content of vinyl cyanide compound is 20 to 37% by weight; and the content of vinyl cyanide compound in the total free polymer is adjusted to 22 to 35% by weight. In this technique, the content of the vinyl cyanide compound graft is made higher than the conventional content (25 to 30% by weight other than rubbery polymer component) of the vinyl cyanide compound in the components of general ABS resin, and thereby a high chemical resistance is given to the resin composition, the stress crack at the time of coating is prevented, and the absorption of the coating material is avoided. However, this technique wherein only the grafted chain is taken into consideration is disadvantageous in that the impact resistance of the resin composition is impractically deteriorated if the content of the vinyl cyanide compound is increased in order to additionally improve the coating performances.

In Japanese Patent Publication No. 63-30953, there is disclosed a technique which comprises using a general ABS resin in mixture with a vinyl cyanide compound/aromatic vinyl compound copolymer in which the vinyl cyanide compound content is as high as 38 to 65% by weight. According to this technique, however, the impact resistance property of the resin composition and its flow property during processing are impractically deteriorated if the content of vinyl cyanide compound is additionally increased in order to improve the coating performance.

In other words, none of the prior techniques has been capable of providing an ABS resin which exhibits good impact resistance and flow property during processing in addition to providing satisfactory coating performances.

EP-A-009655, cited in the official search report, uses solution polymerisation techniques and a screw reactor to produce a thermoplastic resin composition comprising: 40-74 parts by weight of styrene and 26-60 parts by weight of acrylonitrile providing 100 parts by weight of a thermoplastic copolymer and additionally 35 parts by weight of rubber. The composition is said to have improved impact and tensile properties.

SUMMARY OF THE INVENTION

The present inventors conducted many studies to obtain a resin composition exhibiting no stress crack and absorption of coating material during coating even if its molded article has not been subjected to annealing, and having a high gloss vividness of coating surface, excellent coating performances, a sufficient flow property during processing and high impact resistance property. As a result, it was found that the desired properties cannot be achieved satisfactorily by merely increasing the content of the vinyl cyanide compound in either the graft copolymer or the free copolymer, but that only a resin composition having a specified composition and a specified composition distribution can achieve the required performance during processing. It was also found that the increase in the water-absorbing tendency of the resin composition due to the increased content of vinyl cyanide compound and the insufficiency in moldability due to water absorption of resin, can be controlled by making the sum quantity of sodium and potassium remaining in the resin composition lower than a specified value. Based on these findings, the present invention was accomplished

BRIEF DESCRIPTION OF DRAWINGS

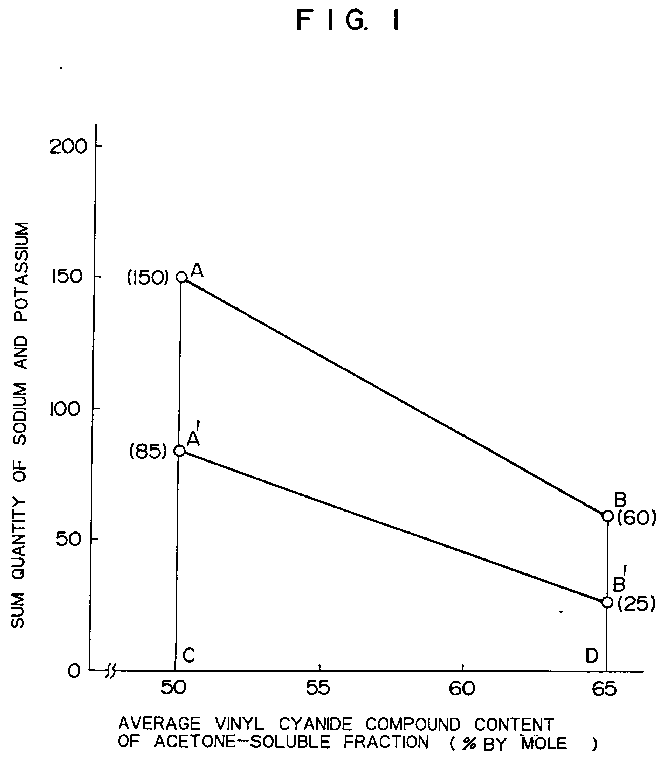

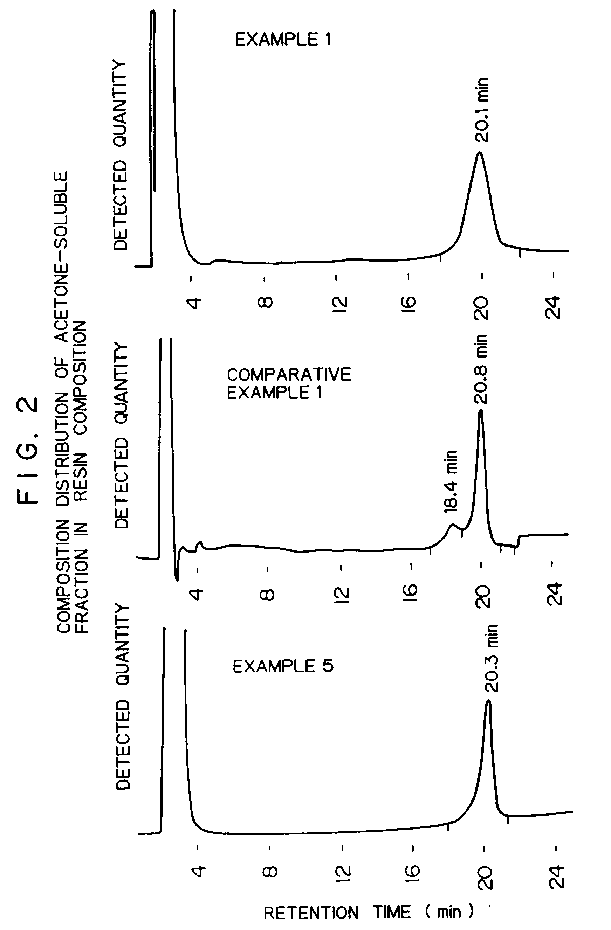

Fig. 1 is a graph illustrating the relation between sum quantity of sodium and potassium and average content of the vinyl cyanide compound in the acetone-soluble fraction (% by mole); and Fig. 2 is a liquid chromatographic chart illustrating the composition distribution of the acetone-soluble fraction in the resin composition.

DETAILED DESCRIPTION OF PREFERRED EMBODIMENTS

According to this invention there is provided a resin composition comprising graft copolymer (I) prepared by graft-copolymerizing a vinyl cyanide compound (A) and an aromatic vinyl compound (S) onto a rubbery polymer (B) and copolymer (II) prepared by copolymerizing a vinyl cyanide compound (A) and an aromatic vinyl compound (S). In this invention, a resin composition having the following characteristic features is used in coatings:

(i) content of (B) in the resin composition is 5 to 50% by weight;
(ii) the average content (M) of vinyl cyanide compound in acetone-soluble component (P) of the resin composition is 50 to 65% by mole;
(iii) (M) of (I) is substantially equal to the average vinyl cyanide compound unit content of (II); and
(iv) in a composition distribution chart, at least 70% by weight of (P) exists in the range of (M) ±2.5% by mole.

For some uses, a part of the aromatic vinyl compound unit may be replaced with an acrylic ester or a methacrylic ester.

In order to avoid the defective moldability due to water absorption of resin composition, the sum quantity of sodium and potassium remaining in resin composition is preferably 150 ppm or less when the average content of vinyl cyanide compound unit (M) is 50% by mole and 60 ppm or less when (M) is 65% by mole, and it is preferably in the area ABCD in Figure 1.

The present invention also provides a process for producing graft-copolymer (I) comprising a vinyl cyanide compound (A) and an aromatic vinyl compound (S) grafted onto a rubbery polymer (B) as described above which process comprises charging the rubbery copolymer into a polymerization reactor in the form of a latex, and thereafter continuously adding and graft copolymerizing onto a rubbery polymer (B) a monomer mixture comprising a vinyl cyanide compound (A) and an aromatic vinyl compound (S), while maintaining a graft-copolymerization rate of 90% or above during at least 3/4 of the period of the total addition time.

The present invention further provides a process for preparing a resin composition having a sharp composition distribution by blending a graft-copolymer (I) produced as described above with a copolymer of a vinyl cyanide compound and aromatic vinyl compound; said copolymer having no substantial composition distribution and being produced by operating a complete mixing type continuous reactor under a definite degree of the polymerization.

Hereinafter, this invention will be explained in more detail.

As is well known, chemical resistance of ABS resin becomes improved as the content of vinyl cyanide compound unit increases in graft copolymer (I) prepared by graft-copolymerizing vinyl cyanide compound (A) and aromatic vinyl compound (S) onto the rubbery polymer or in copolymer (II) prepared by copolymerizing vinyl cyanide compound and aromatic vinyl compound. Further, as pointed out in the prior literature, the defective appearance produced during coating can be avoided to some extent by improving the chemical resistance prdperty.

On the other hand, it is known that an increase in the content of the vinyl cyanide compound unit deteriorates flow property during processing and the impact resistance property of the resin composition. If a molded article is produced from a resin composition which is poor in flow property, it is likely to contain residual strain, so that cracks are formed when contacted with a coating material and thinner, which results in deteriorating its appearance. Further, doubtlessly, a resin composition having a low impact resistance is not useful industrially. Thus, the important point in the technique of ABS resin for use in coatings has consisted of being able to increase the content of vinyl cyanide compound to the extent that it can be increased without deteriorating the flow proper and impact resistance. The prior art is based on the technical idea that chemical resistance can be assured by increasing the content of vinyl cyanide compound in one of (I) and (II) and flow property and impact resistance can be maintained, by keeping the vinyl cyanide compound content in the other of (I) and (II), on a relatively low level.

In such a technique, however, the existence of the component having a lower vinyl cyanide compound content deteriorates the chemical resistance, so that coating performances of the resin composition are unsatisfactory. According to the prior art, coating performances have been contradictory to flow property and impact resistance, and it has been difficult to fulfill both requirements simultaneously.

The present inventors conducted many studies to provide a resin composition having a high content of vinyl cyanide compound and being excellent in coating performances without deteriorating the flow property during processing and the impact resistance property. As the result, this invention was accomplished. The findings of the present inventors that A and S components of graft copolymer (I) must be substantially equal to copolymer (II) in terms of the average content of the vinyl cyanide compound unit and that acetone-soluble resin component (P) of resin composition must have a sharp composition distribution, have been unexpectable from prior art. Owing to this discovery, it has become possible for the first time to provide an ABS resin having an average content of vinyl cyanide compound (M) as high as 50 to 65% by mole (33.8 to 48.6% by weight) on a practical level of 40 to 46% by mol.

The term "coating performances" referred to in this invention means that, when the molded article of the resin is contacted with a coating material and thinner, no stress crack is formed and the absorption of the coating material does not occur and the coating surface has a high gloss vividness of mirror image (hereinafter simply referred to as gloss vividness) and its appearance is comparable to that of a coated steel plate. At the same time, since the flow property during processing is as high as that of conventional ABS resins, the weld line of injection molding is shallow and imperceptible. Further, since the addition of a large quantity of plasticizer (low molecular weight compound) for improving flow property is unnecessary, no repelling of the coating material and no defective adhesion occur. The term "coating performances" means these performances inclusively.

(a) Next, the average content of vinyl cyanide compound unit and composition distribution will be explained.

In the resin composition of this invention, (M), i.e. average content of vinyl cyanide compound unit in the acetone-soluble resin component (P), is 50 to 65% by mole, preferably 53 to 60% by mole, and more preferably 55 to 58% by mole. If (M) is smaller than 50% by mole, absorption of the coating material readily occurs. If (M) is greater than 65% by mole, the flow property during processing is deteriorated.

The AS component of graft copolymer (I) constituting the resin composition must be substantially equal to copolymer (II) in (M). The allowable range of (M) is at most 5% by mole, as expressed in terms of difference between average content of the vinyl cyanide compound unit in the AS component of graft copolymer (I) and the average content of vinyl cyanide compound unit in copolymer (II). If this difference is greater than this allowable range, the dispersion of graft copolymer (I) in copolymer (II) will not be uniform, and the impact resistance property would be deteriorated.

The shape of the composition distribution curve of acetone-soluble component (P) of resin composition has an important meaning. At least 70% by weight, preferably at least 75% by weight, and particularly at least 80% by weight of (P) must have an (M) value falling within the range of (M) ± 2.5% by mole. A resin composition having a broad composition distribution prepared by compounding a copolymer (II) having a low vinyl cyanide compound unit content with a copolymer (II) having a high vinyl cyanide compound unit content, is inferior to a resin composition having a sharp composition distribution in coating performances and particularly in gloss vividness of coating surface, even though the two resin compositions may be equal to each other in terms of (M).

The composition distribution of acetonesoluble fraction (P) can be analyzed according to the known method mentioned in Acta Polymerica, 33, 614 (1982), Macromolecules 17, 962 (1984), etc. In this specification, the composition distribution of (P) is determined by measuring the peak area in chromatogram and converting it to "% by weight".

Also, the composition distribution can be determined by periodically sampling the content of the polymerization reactor, quantitatively analyzing the free monomers present therein and calculating the copolymer composition by referring to the mass balance between the initially fed monomers and the remaining monomers. The analytical result obtained by the latter method well coincides with the analytical result obtained by the former method (liquid chromatography). The latter method is effectively usable when a terpolymer to which liquid chromatography cannot easily be applied is used as copolymer (II).

(b) Next, the method for producing a resin composition having a sharp composition distribution will be explained.

In producing the resin composition of this invention, the composition ratio between vinyl cyanide compound and aromatic vinyl compound to be reacted is in a range where the concentration of vinyl cyanide is higher than the azeotropic mixture of the two monomers. Accordingly, if the total monomer mixture is reacted by a simple batch procedure, the copolymer formed just after the start of the polymerization is different from the copolymer formed in the later stages of the polymerization in terms of the content of the vinyl cyanide compound unit, and the resulting total copolymer cannot have a sharp composition distribution.

When the copolymerization is carried out batch-wise, it is preferable to continuously add a monomer mixture into the reaction system so that the added monomer mixture can be rapidly consumed. In general, it is preferable to maintain a polymerization rate of 90%, more preferably 93% or more, during at least 3/4 period of the total addition time of the monomer mixture. For maintaining a high polymerization rate, known methods can be applied such as methods which adopt a long period of time for the addition of a monomer mixture, which use a large quantity of polymerization initiator, which adopt a high polymerization temperature, etc.

As another method for rendering the composition distribution sharp, there can be mentioned a method which comprises carrying out a graft copolymerization of high rubbery polymer content according to the above-mentioned method and mixing the resulting polymer with a copolymer having no substantial composition distribution having been produced by a complete mixing type continuous polymerization process. This method can particularly effectively be carried out in the mode of solution polymerization, when the vinyl cyanide compound is acrylonitrile and the aromatic vinyl compound is styrene or when a part of the aromatic vinyl compound is replaced with acrylic ester or methacrylic ester.

When a copolymer formed by this method is mixed with the above-mentioned graft copolymer having a high rubbery polymer content obtained by a batch process, it is necessary to determine the average content of the vinyl cyanide compound unit in the AS component of the graft copolymer and the average content of the vinyl cyanide compound unit of the copolymer previously, and to combine the two copolymers so that the vinyl cyanide contents of the two copolymers coincide with each other as close as possible.

When alpha-methylstyrene is used as the aromatic vinyl compound, in many cases emulsion polymerization is adopted to limit the polymerization velocity. Since alpha-methylstyrene more readily forms an alternating structure, than that when styrene is used, copolymerization with a vinyl cyanide compound, the composition distribution of the resulting copolymer is likely to become broad if the content of vinyl cyanide compound is increased. To prepare a composition in which the composition distribution falls in the allowable range, the polymerization system used to prepare the composition must be kept in a state of high activity and the monomer mixture continuously added to the system must be consumed rapidly. At this time, a selection of the emulsifier plays an important role. Thus, it is preferable to use a mixed emulsifier consisting of 70 to 30% by weight of sodium or potassium rosinate and 30 to 70% by weight of sodium or potassium salt of alkenylsuccinic acid in an amount of 1.5 to 3.0 parts by weight per 100 parts by weight of the total monomer mixture. If sodium or potassium rosinate is used alone, the initiation of the polymerization is slow, so that a polymerization rate of 90% or above cannot be achieved during the time period of 3/4 or more of the total time period of monomer addition. If sodium or potassium salt of alkenylsuccinic acid is used alone, the viscosity of the polymerization system increases, so that in the later stages of the reaction, the polymerization rate decreases. If the amount of the mixed emulsifier is smaller than 1.5 parts, the initiation of polymerization is slow. If it exceeds 3.0 parts, the viscosity of the reaction system increases.

(c) Next, the types of the monomers used in the copolymerization and the molecular weights of the copolymers will be mentioned.

In the standard resin composition of this invention, acrylonitrile is used as the vinyl cyanide compound and styrene is used as the aromatic vinyl compound. When a good flow property is required of the resin composition during processing, a part of the aromatic vinyl compound can be replaced with an acrylic ester or methacrylic ester. As the ester monomer, butyl acrylate is preferable, with which 5 to 50% by weight and preferably 10 to 40% by weight of the aromatic vinyl compound can be replaced. If the amount of the ester monomer is smaller than 5% by weight, its use does not bring about a sufficient effect. If its amount is greater than 50% by weight, the heat resistance property is deteriorated.

When a high heat resistance property is required of the resin composition, alpha-methylstyrene can be used as the aromatic vinyl compound.

The molecular weight of the acetone-soluble fraction (P) of the resin composition may be designed in accordance with the strength and flow property required of the article. The molecular weight of the polymer is expressed by solution viscosity $\eta$sp/c (30°C, in methyl ethyl ketone solvent, concentration 0.5% by weight). When the article is produced by an injection molding process, it is 0.3 to 0.7 and preferably 0.35 to 0.6. When the article is produced by a blow molding process or sheet molding process, it is 0.4 to 1.0 and preferably 0.5 to 0.8.

The degree of grafting a copolymer onto a rubbery polymer, is defined by the following formula:

$$\text{Degree of grafting} = \left( \frac{\text{Weight of acetone} - \text{insoluble fraction}}{\text{Weight of rubbery polymer}} - 1 \right) \times 100$$

This value is preferably 30 to 70%.

(d) Next, the rubbery polymer will be explained.

As the rubbery polymer, diene type rubbers such as polybutadiene, butadiene-styrene copolymer, butadieneacrylonitrile copolymer, polyisoprene, polychloroprene and the like, acrylic rubbers such as butyl acrylate-methyl methacrylate-(meth)acrylic ester copolymer and the like, and saturated rubbers such as ethylene-propylene copolymer rubber, hydrogenated polybutadiene, fluorinated rubber, silicone rubber and the like can be used.

The optimum particle diameter of the rubbery polymer varies depending on the composition of the monomer units constituting copolymer (II). When copolymer (II) is constituted of acrylonitrile-styrene copolymer and acrylonitrile-styrene-(meth)acrylic ester copolymer, preferable particle diameter is 0.2 to 0.4 micron. When copolymer (II) is acrylonitrile-alpha-methylstyrene copolymer, preferable particle diameter is 0.1 to 0.2 micron.

The particle diameter of the rubbery polymer used in this invention can be determined from the electron microscopic photograph of the rubber latex used as the starting material.

The content of the rubbery polymer in the final resin composition is 5 to 50% by weight and preferably 10 to 30% by weight.

(e) Next, the allowable quantity of sodium and potassium remaining in the resin composition will be explained.

One of the characteristic features of the resin composition of this invention is that the content of vinyl cyanide compound unit of the ABS resin thereof, is higher than in conventional resins. Vinyl cyanide compounds are generally said to be hydrophilic, and copolymers prepared by copolymerizing these compounds are hygroscopic. If a resin having absorbed water is directly molded by means of heating, the vaporized water would form flash on the surface of molded article, which would in turn, form a marked die line, or would include air bubbles and thereby deteriorates the appearance and mechanical strength of article. Accordingly, conventional ABS resins are usually preliminarily dried with heat prior to molding. It was unexpected that the sum quantity of sodium and potassium in the resin composition plays an important role for bringing the resin composition of this invention into a state which is dry enough to prevent its molded article from having a defective appearance under the conventional drying conditions of ABS resin (80 - 90°C, 2 - 4 hours). The sodium and potassium originate from the emulsifier and polymerization initiator used in the emulsion polymerization process, and presumably they remain in the resin composition when they do not sufficiently react with the acid or inorganic electrolyte used in the salting-out step after the polymerization for the purpose of depositing the resulting polymer or when they are not sufficiently washed away in the washing step even though they have reacted with these chemicals. Although details of this phenomenon are yet unknown, the defective moldability due to insufficient dryness can be avoided by reducing the sum quantity of sodium and potassium. The residual quantities of sodium and potassium can be measured by atomic absorptiometry.

The allowable limit of the sum quantity of sodium and potassium varies depending on the average content of vinyl cyanide compound unit (M) in copolymer (II). That is, when (M) is relatively small (50% by mole), the allowable sum quantity of sodium and potassium is 150 ppm or less and preferably 85 ppm or less while when (M) is greater (65% by mole) it is 60 ppm and preferably 25 ppm or less. This holds whether the aromatic vinyl compound is styrene or alpha-methylstyrene or those partially replaced with acrylic ester or methacrylic ester. Allowable range and preferable range are shown in Figure 1 as area ABCD and A'B'CD, respectively.

As a means for decreasing the quantity of sodium and potassium, the quantity of the emulsifier and the polymerization initiator containing sodium or potassium can be decreased and the salted out slurry can be sufficiently washed out. A preferable means is a method which comprises producing only a graft copolymer having a high rubbery polymer content by emulsion polymerization and blending the resulting polymer with a copolymer containing neither sodium nor potassium produced by solution polymerization.

Into the resin composition of this invention, known additives such as antioxidant, ultraviolet absorber, slipper, mold release agent, flame retardant, antistatic agent, colorant and the like may arbitrarily be added. Its reinforcement with glass fiber, carbon fiber or the like is also arbitrarily adoptable.

Next, this invention will be explained by way of the following non-limitative examples, wherein the term "parts" means "parts by weight".

1. Production of resin composition by one step polymerization

According to this method, copolymer (II) is produced at the time of producing graft copolymer (I).

a-1: A polybutadiene rubber latex (weight average particle diameter 0.3 micron, solid rubber content 16 parts, deionized water content 100 parts, potassium rosinate content 1.0 part) is introduced into a polymerization reactor equipped with a reflux condenser. After replacing the gas phase with nitrogen gas, the temperature is elevated to 70°C. To the latex are continuously added (1) a monomer mixture consisting of 33.6 parts of acrylonitrile, 50.4 parts of styrene, 0.85 part of t-dodecylmercaptan and 0.1 part of cumeme hydroperoxide and (2) an aqueous solution prepared by dissolving 0.2 part of sodium formaldehyde sulfoxylate, 0.004 part of ferrous sulfate and 0.04 part of disodium salt of ethylenediaminetetraacetic acid in 50 parts of deionized water, and reacted over a period of 6 hours. During the reaction period, the temperature of the polymerization system is kept at 70°C. After the addition the resulting mixture is kept at a state of high activity for an additional hour to complete the reaction.

When 1.5 hours has passed from the initiation of the reaction, the polymerization rate is 90% or above. Thereafter, a high polymerization rate of 90% or above is maintained. The final polymerization rate is 93.4%.

The degree of grafting to the rubbery polymer is 54%. In (I)-I, it is confirmed that an acrylonitrile-styrene copolymer corresponding to copolymer (II) is also formed simultaneously with the grafting reaction yielding graft copolymer (I).

The copolymer latex thus obtained is diluted with deionized water so as to yield a solid component content of 10% and is heated to 80°C. Then, the latex is coagulated by adding 1.3 parts of magnesium sulfate per 100 parts of solid component. The coagulated product is centrifugally dehydrated to obtain a cake having a water content of 65%. The dehydrated cake is twice subjected to re-slurrying and washing treatments and dried by means of a hot air circulation type oven at 90°C to obtain a dry flask. One hundred parts of the dry flake is mixed with 0.2 part of an antioxidant (BHT manufactured by Sumitomo Kagaku K. K.) and 0.5 part of a mold release agent (ethylene-bisstearylamide) and pelletized by means of an extruder.

The pellet thus obtained is injection molded at a cylinder temperature of 240°C and a mold temperature of 45°C to prepare dampbell test pieces according to ASTM D-638.

The test piece thus obtained is dipped in an acrylic coating solution (RECRACK® 55 manufactured by Fujikura Kasei K.K. : Nonblushing : 169 thinner = 50 : 15 : 35) for 20 seconds and dried at 80°C for 30 minutes, after which formation of crack and absorption of coating solution are visually examined.

Further, a test piece is coated with an electroconductive coating material (electroconductive primer manufactured by Nippon Yushi K.K.) by means of a spray and thereafter coated with a urethane coating material (Hi Urethane® 5000 manufactured by Nippon Yushi K.K.) by means of a spray and dried at 75°C for 20 minutes. Gloss vividness of the coating is measured by means of a mirror image meter (ICM-ID, manufactured by Suga Shikenki K.K., slit width 1 mm, reflexion angle 45°).

Composition distribution of the resin composition is measured by the following method.

Component (P) is extracted from the resin composition by the use of acetone, and is analyzed by liquid column chromatography using tetrahydrofuran and n-hexane as the developer, silica column (ZORBAX-CN manufactured by DuPont) as a column, UV (254 nm) as a detector and GE-LC-GII System manufactured by Shimazu K.K. as the apparatus.

Mechanical properties of the resin composition are measured according to standard.

a-2 to a-5: A polymerization is carried out in the same manner as in a-1, except that the composition of the monomer mixture and the amount of t-dodecylmercaptan are altered. After-treatment and analyses are carried out in the same manner as in a-1.

a-6: Twenty parts of a solid component of rubbery polymer is reacted with a monomer mixture consisting of 40 parts of acrylonitrile, 24 parts of styrene, 16 parts of butyl acrylate and 1.3 parts of t-dodecylmercaptan. After-treatment is carried out in the same manner as in a-1.

In order to know the composition distribution of polymerized product, the content of reactor is sampled out at intervals of 30 minutes, and composition and composition distribution of the formed polymer are determined based on the mass balance between the fed monomers and the monomers remaining in the system.

The resin composition is separated into an acetone-soluble fraction and an acetone-insoluble fraction, and their average compositions are determined by means of IR, from which the content of acrylonitrile unit in the acetone-soluble fraction and the content of acrylonitrile unit in the acetone-insoluble fraction, from which the rubbery polymer has been subtracted, are determined. Since the two results well coincided with each other, the composition of the acetone-soluble fraction could be expressed by the analyses of the products produced by the process of the polymerization.

a-7: The reaction of a-1 is repeated, except that the period of time for the addition of the monomer mixture and aqueous solution is shortened to 3 hours. When 1.5 hours has passed from the initiation of the polymerization, the polymerization rate is 84%. The final polymerization rate is 92.7%.

After-treatment, evaluation of the product and analyses are carried out in the same manner as in a-1. The production processes and results of a-1 to a-7 are summarized in Table 1. Whether a resin composition is good or not good is judged in the following manner. Thus, in view of the properties required of automotive exterior trims, a resin composition having a melt flow rate of 15 gh/10 minutes or more and an Izod impact strength of 15 kg-cm/cm or more, showing no absorption of coating material and exhibiting a gloss vividness of coating surface of 45% or more is defined as a "good" resin composition.

As typical examples of the analysis of composition distribution, chromatograms of a-1 (example of this invention), a-7 (comparative example) and Example 5 (a preferred example of this invention mentioned in the following section) are shown in Table 5 and Fig. 2.

2. Blend synthesis of resin composition (method 1)

Graft copolymers (I) are synthesized in b-1 to b-4. Copolymers (II) are synthesized in c-1 to c-4. By blending graft copolymer (I) with copolymer (II), resin compositions are prepared.

b-1: Into a polymerization reactor equipped with a reflux condenser are charged 40 parts (weight of the solid component) of a polybutadiene rubber latex (0.3 micron), 100 parts of deionized water, 0.3 part of potassium rosinate and 0.2 part of t-dodecylmercaptan. After replacing the inner atmosphere with nitrogen gas, the temperature is elevated to 70°C. Then, a mixture consisting of 24 parts of acrylonitrile, 36 parts of styrene, 0.15 part of cumeme hydroperoxide and 0.4 part of t-dodecylmercaptan and an aqueous solution prepared by dissolving 0.3 part of sodium formaldehyde-sulfoxylate, 0.004 part of ferrous sulfate and 0.04 part of disodium salt of ethylene-diaminetetraacetic acid in 50 parts of deionized water are continuously added and reacted over a period of 7 hours. During this period of time, the temperature of the polymerization system is maintained at 70°C. After the addition, an additional 0.02 part of cumeme hydroperoxide is added, and the reaction mixture is kept at a state of high activity for additional hour to complete the reaction. The latex thus obtained is made into dry flakes in the same manner as in a-1.

b-2 and b-3: In these experiments, the same reaction as in b-1 is carried out, except that composition of the monomer mixture and amount of t-dodecylmercaptan are altered. In b-4, the reaction of b-1 is repeated, except that the starting rubber latex differed from that of b-1 in particle diameter.

Table 2-1 summarizes the polymerization process, polymerization rate, degree of grafting, and content of acrylonitrile unit determined by IR.

c-1: Into a continuous, complete mixing type reactor which has previously been heated to 160°C, a monomer mixture consisting of 37.5 parts of acrylonitrile, 37.5 parts of styrene and 25 parts of ethylbenzene is continuously added and reacted, while discharging a quantity, equal to the quantity of fed monomer mixture, of polymer solution. After the solid content in the reaction system has been stabilized at a level of 50% by weight, the discharged polymer solution is deaerated, granulated and formed into sample pellets. c-2, c-3 and c-4: In c-2 and c-3, composition of the monomer mixture fed into reactor is altered. In c-4, a part of styrene is replaced with butyl acrylate.

Table 2-2 summarizes the polymerization process and acrylonitrile content in copolymer determined by IR.

The copolymers of b-1 to b-4 are blended with copolymers of c-1 to c-4 at the blending ratios shown in Table 2-3. After adding 0.2 part of antioxidant (BHT manufactured by Sumitomo Kagaku K.K.) and 0.5 part of mold release agent (ethylene-bisstearylamide), each composition is kneaded and pelletized by means of an extruder.

Coating performances and mechanical properties of the compositions are measured in the same manner as in a-1. The results are summarized in Table 2-3.

3. Blend synthesis of resin composition (method 2)

Graft copolymers (I) are synthesized in D-1 to D-7. Copolymers (II) are synthesized by emulsion polymerization in E-1 to E-9. Both materials are blended together to prepare resin compositions.

D-1: Into a polymerization reactor equipped with a reflux condenser are charged 60 parts (weight of solid component) of polybutadiene rubber latex (weight average particle diameter 0.15 micron) and 100 parts of deionized water. After replacing the inner atmosphere with nitrogen gas, the temperature is elevated to 70°C. To the latex, (1) a monomer mixture consisting of 14 parts of acrylonitrile, 26 parts of styrene, 0.3 part of t-dodecylmercaptan and 0.2 part of cumene hydroperoxide and (2) an aqueous solution prepared by dissolving 0.4 part of sodium formaldehyde-sulfoxylate, 0.004 part of ferrous sulfate and 0.04 part of disodium salt of ethylene-diaminetetraacetic acid in 50 parts of deionized water are continuously added and reacted over a time period of 5 hours. During this period, temperature of the polymerization system is kept at 70°C. After the addition, the reaction mixture is kept at a state of high activity for an additional 30 minutes to complete the reaction.

D-2 to D-7: In these experiments, the polymerization of D-1 is repeated, except that in the monomer composition, the amount of acrylonitrile, styrene and/or the particle diameter of the starting rubber latex are altered.

Table 3-1 summarizes the polymerization process and the results.

E-1: Into 170 parts of deionized water are dissolved 1.0 part of potassium alkenylsuccinate (LATEMUL® ASK, manufactured by Kao Sekken K.K.) and 1.0 part of potassium rosinate. After adding 0.4 part of sodium formaldehyde-sulfoxylate, 0.004 part of ferrous sulfate and 0.04 part of disodium salt of ethylene-diaminetetraacetic acid and replacing the gas phase with nitrogen gas, the temperature is elevated to 65°C. Into this aqueous solution, (1) a monomer mixture consisting of 35 parts of acrylonitrile, 65 parts of alpha-methylstyrene, 1.0 part of t-dodecylmercaptan and 0.5 part of cumene hydroperoxide and (2) an aqueous solution prepared by dissolving 0.6 part of sodium formaldehydesulfoxylate, 0.004 part of ferrous sulfate and 0.04 part of disodium salt of ethylene diaminetetraacetic acid in 80 parts of deionized water are continuously added and reacted over a period of 8 hours. When 2 hours has passed after the start of the addition, the polymerization rate exceeded 90%. Thereafter, a polymerization rate of 90% or higher is maintained. After the addition, the reaction mixture is kept at a state of high activity for an additional hour to complete the reaction. The final polymerization rate is 98.1%.

E-2 to E-11: In these experiments, the procedure of E-1 is repeated, except that the composition of the monomer mixture, the period and method of the continuous addition of the monomer mixture and aqueous solution, and the type and amount of emulsifier are altered.

The latexes thus formed are frozen to deposit the copolymer, and the deposited copolymer dried. The composition and composition distribution of the copolymer are measured by liquid chromatography.

The results of the production are summarized in Table 3-2.

Graft copolymer D and alpha-methylstyrene-containing copolymer E are blended together in a state of latexes so that the proportion thereof is 30:70 as expressed in terms of a solid component ratio. Thereafter, the blended mixture is pelletized in the same manner as in a-1. Test pieces are prepared therefrom by injection molding at a cylinder temperature of 20°C and at a mold temperature of 60°C. Evaluation is then carried out in the same manner as in a-1.

The results are summarized in Table 3-3. In Examples 15 and 16, the blending ratio of graft copolymer D-1 to copolymer E-1 is altered to 20:80 and 40:60, respectively.

In Table 3-3, a resin composition is taken as a "good" resin composition when it has a melt flow rate of 3.0 or above and an Izod impact strength of 8.0 or above, and an absorption of the coating material did not occur, and gloss vividness of coating surface is 60% or higher.

3. Drying characteristics of resin composition

In the preparation of resin compositions a-1, a-2 and a-4, the number of washing treatments of salted out slurry is varied to prepare resin compositions F-1 to F-7, which are different from one another in the quantity of metal remaining in the resin. Further, in the composition (b-1)/(c-1) = 42.5/57.5 corresponding to Example 5, the washing of the slurry is omitted in the production of (b-1), and this composition is referred to as F-8. Further, in the composition of (b-3)/(c-3) = 45/55 corresponding to Example 10, the washing of the slurry is omitted in the production of (b-3), and this composition is referred to as F-9.

Compositions F-1 to F-9 are allowed to stand in a thermostatted bath (30°C, 100% humidity) for 5 days until the absorption of moisture has reached saturation. Each sample having absorbed moisture is dried under the conditions shown in Table 4 by means of a hot air circulation type oven. The oven has a sufficiently large capacity as compared with the quantity of sample. The samples are uniformly placed in the oven so as to have a thickness of 3 cm. Water contents in the water-absorbing samples and dry samples are measured with Karl Fischer water analyzer at an oven temperature of 250°C. At the same time, each sample is injection molded (cylinder temperature 240°C, mold temperature 45°C, no back pressure), and the occurrence of flash is visually examined. The results are summarized in Table 4.

Table 1

| | | Example 1 | Comparative Example 1 | Example 2 |
|---|---|---|---|---|
| Experiment No. | | a-1 | a-2 | a-3 |
| Charged rubbery polymer | (parts) | 16 | 16 | 16 |
| Additional acrylonitrile | (parts) | 33.6 | 28.6 | 37.8 |
| Additional styrene | (parts) | 50.4 | 55.4 | 46.2 |
| Additional butyl acrylate | (parts) | 0 | 0 | 0 |
| Additional t-dodecylmercaptan | (parts) | 0.85 | 0.7 | 1.0 |
| Addition time of monomers | (hrs) | 6 | 6 | 6 |
| Polymerization rate | (%) | 93.4 | 93.5 | 93.0 |
| Degree of grafting | (%) | 54 | 60 | 50 |
| Av. acrylonitrile content in acetone-soluble fraction | (% by mole) | 56.5 | 49.0 | 60.1 |
| Proportion of solube fraction existing in the range | (M±2.5%)(%) | 78.5 | 78.5 | 78.0 |
| Melt flow rate (JIS-K7210, 220°C, 10Kg Load) | | 24.4 | 30.1 | 24.2 |
| Izod impact strength (ASTM D256) | | 23.3 | 18.9 | 30.5 |
| Absorption of coating material (visual examination)※ | | − | + | − |
| Gloss vividness of coating surface | | 45.6 | 18.6 | 47.8 |
| Overall evaluation | | ○ | x | ○ |

※  −:  No absorption noticeable
   +:  Absorption noticeable

EP 0 372 978 B1

Table 1 (Cont'd)

| Example 3 | Comparative Example 2 | Example 4 | Comparative Example 3 |
|---|---|---|---|
| a-4 | a-5 | a-6 | a-7 |
| 16 | 16 | 20 | 16 |
| 42.0 | 50.4 | 40.0 | 33.6 |
| 42.0 | 33.6 | 24.0 | 50.4 |
| 0 | 0 | 16.0 | 0 |
| 1.3 | 1.6 | 1.3 | 0.85 |
| 6 | 6 | 6 | 3 |
| 91.5 | 90.0 | 93.7 | 92.7 |
| 45 | 43 | 48 | 50 |
| 64.0 | 71.8 | 64.0 | 55.3 |
| 76.5 | 75.5 | 75.8 | 65.5 |
| 15.4 | 2.8 | 17.9 | 20.3 |
| 19.6 | 37.3 | 73.9 | 21.5 |
| – | – | – | – |
| 52.5 | 43.3 | 60.8 | 23.3 |
| ○ | × | ○ | × |

EP 0 372 978 B1

Table 2-1 Copolymer (I)

| Graft Copolymer (I) No. | | b-1 | b-2 | b-3 | b-4 |
|---|---|---|---|---|---|
| Amount of charged rubbery polymer | (parts) | 40 | 40 | 40 | 40 |
| Particle diameter of rubbery polymer | (micron) | 0.3 | 0.3 | 0.3 | 0.15 |
| Additional acrylonitrile | (parts) | 24 | 20.4 | 30 | 24 |
| Additional styrene | (parts) | 36 | 39.6 | 30 | 36 |
| Additional t-dodecylmercaptan | (parts) | 0.4 | 0.3 | 0.5 | 0.4 |
| Polymerization rate | (%) | 96.5 | 97.3 | 95.0 | 97.0 |
| Degree of grafting | (%) | 50.4 | 55.2 | 47.5 | 55.3 |
| Content of acrylonitrule unit | (% by mole) | 55.2 | 49.3 | 63.0 | 55.5 |

Table 2-2

| Copolymer (II) No. | | c-1 | c-2 | c-3 | c-4 |
|---|---|---|---|---|---|
| Amount of acrylonitrile | (parts) | 37.5 | 30 | 42 | 32.5 |
| Amount of styrene | (parts) | 37.5 | 45 | 30 | 25 |
| Amount of butyl acrylate | (parts) | 0 | 0 | 0 | 7.5 |
| Amount of ethylbenzene | (parts) | 25 | 25 | 25 | 35 |
| Reaction temperature | (°C) | 160 | 160 | 160 | 150 |
| Average retention time | (hrs) | 2 | 2 | 2 | 2 |
| Content of acrylonitrile unit | (% by mole) | 56.7 | 50.3 | 63.5 | 56.5 |
| Content of butyl acrylate unit | (% by mole) | 0 | 0 | 0 | 5.8 |

Note:  After polymer concentration in the polymerization system has reached a constant value of 50% by weight, the copolymer is taken out and used as the sample.

EP 0 372 978 B1

Table 2-3

| | | | Example 5 | Example 6 | Example 7 | Example 8 |
|---|---|---|---|---|---|---|
| Formula-tion | Graft copolyme (I) No. | | b-1 | b-1 | b-1 | b-1 |
| | Acrylonitrile content in the component other than rubber | (%) | 55.2 | 55.2 | 55.2 | 55.2 |
| | Compounding ratio | (%) | 42.5 | 50 | 60 | 45 |
| | Copolymer (II) No. | | c-1 | c-1 | c-1 | c-4 |
| | Acrylonitrile content | (%) | 56.7 | 56.7 | 56.7 | 56.5 |
| | Compounding ratio | (%) | 57.5 | 50 | 40 | 55 |
| Amount of rubber in resin composition (parts) | | | 17.4 | 20.4 | 24.5 | 18.3 |
| Av. acrylonitrile content in acetone-soluble fraction | | (%) | 56.0 | 55.5 | 55.0 | 55.8 |
| Proportion of (M)±2.5% by mole fraction | | (%) | 97.0 | 96.3 | 95.1 | 96.3 |
| Melt flow rate | | (JIS-K7210) | 26.0 | 22.0 | 15.3 | 24.1 |
| Izod impact strength | | (ASTM D256) | 16.0 | 20.0 | 30.0 | 32.1 |
| Absorption of coating material (visual)※ | | | – | – | – | – |
| Gloss vividness of coating | | (%) | 88.7 | 87.5 | 85.0 | 82.5 |
| Overall evaluation | | | ○ | ○ | ○ | ○ |

※ –: No absorption noticeable
+: Absorption noticeable

(Cont'd)

EP 0 372 978 B1

Table 2-3 (Cont'd)

| Example 9 | Comparative Example 4 | Comparative Example 5 | Comparative Example 6 | Comparative Example 7 | Example 5 | Comparative Example 10 |
|---|---|---|---|---|---|---|
| b-1 | b-2 | b-1 | b-3 | b-1 | b-3 | b-4 |
| 55.2 | 49.3 | 55.2 | 63.0 | 55.2 | 63.0 | 55.5 |
| 50 | 45 | 45 | 45 | 45 | 45 | 45 |
| c-4 | c-2 | c-2 | c-2 | c-3 | c-3 | c-1 |
| 56.5 | 50.3 | 50.3 | 50.3 | 63.5 | 63.5 | 56.7 |
| 50 | 55 | 55 | 55 | 55 | 55 | 55 |
| 20.4 | 18.3 | 18.3 | 12.6 | 18.3 | 18.6 | 18.3 |
| 56.0 | 49.8 | 52.2 | 54.5 | 61.2 | 63.5 | 56.3 |
| 95.5 | 95.5 | 67.0 | 10> | 5> | 91.1 | 97.5 |
| 21.4 | 12.5 | 8.8 | 5.5 | 14.4 | 15.0 | 24.1 |
| 35.5 | 29.4 | 28.8 | 10.9 | 4.2 | 32.5 | 75 |
| − | + | + | − | − | − | − |
| 80.0 | 27.5 | 24.5 | 30.1 | 50.5 | 82.1 | 90.3 |
| ○ | × | × | × | × | ○ | × |

EP 0 372 978 B1

Table 3-1

| Graft Copolymer (I) No. | D-1 | D-2 | D-3 | D-4 | D-5 | D-6 | D-7 |
|---|---|---|---|---|---|---|---|
| Amount of charged rubbery polymer (parts) | 60 | 60 | 60 | 60 | 60 | 60 | 60 |
| Particle diameter of rubbery polymer (micron) | 0.15 | 0.15 | 0.15 | 0.15 | 0.26 | 0.08 | 0.15 |
| Additional acrylonitrile (parts) | 14 | 16 | 20 | 10.8 | 14 | 14 | 14 |
| Additional styrene (parts) | 26 | 24 | 20 | 20.9 | 26 | 26 | 0 |
| Additional α-methylstyene (parts) | 0 | 0 | 0 | 0 | 0 | 0 | 26 |
| Additional t-dodecylmercaptan (parts) | 0.3 | 0.3 | 0.3 | 0.3 | 0.3 | 0.3 | 0.3 |
| Polymerization rate (%) | 92.9 | 93.3 | 90.5 | 95.6 | 91.4 | 93.7 | 90.4 |
| Degree of grafting (%) | 48 | 51 | 55 | 45 | 44 | 42 | 40 |
| Content of acrylonitrile unit (% by mole) | 53.8 | 58.0 | 67.1 | 44.0 | 52.5 | 54.0 | 52.1 |

EP 0 372 978 B1

Table 3-2

| | E-1 | E-2 | E-3 | E-4 | E-5 |
|---|---|---|---|---|---|
| Emulsifier (Table 3-2-2) | A | A | A | A | A |
| Initially charged α-methylstyrene (parts) | 0 | 0 | 0 | 0 | 0 |
| Additional α-methylstyrene (parts) | 65 | 65 | 65 | 60 | 60 |
| Additional acrylonitrile (parts) | 35 | 35 | 35 | 40 | 40 |
| Period of continuous addition (hrs) | 8 | 4 | 12 | 8 | 12 |
| Polymerization rate after 2 hrs. (%) | 90.5 | 87.4 | 91.3 | 90.0 | 91.0 |
| Final polymerization rate (%) | 98.1 | 97.3 | 78.5 | 96.9 | 97.3 |
| Content of acrylonitrile unit (% by mole) | 54.5 | 54.0 | 54.6 | 59.0 | 59.2 |
| Proportion of (M)±2.5% by mole fraction (%) | 72.1 | 63.5 | 79.0 | 70.5 | 75.3 |

Note

| | | K rosinate | K alkenylsuccinate |
|---|---|---|---|
| Emulsifier | A | 1.0 | 1.0 |
| | B | 2.0 | |
| | C | | 2.0 |
| | D | 0.5 | 0.5 |

(Cont'd)

EP 0 372 978 B1

Table 3-2 (Cont'd)

| E-6 | E-7 | E-8 | E-9 | E-10 | E-11 |
|------|------|------|------|------|------|
| A | B | C | B | A | A |
| 65 | 0 | 0 | 0 | 0 | 0 |
| 0 | 65 | 65 | 65 | 50 | 73 |
| 35 | 35 | 35 | 35 | 50 | 27 |
| 8 | 8 | 8 | 8 | 8 | 8 |
| 91.1 | 43.5 | 94.5 | 54.2 | 88.5 | 95.1 |
| 97.5 | 90.9 | — | 93.3 | 94.9 | 99.9 |
| 53.8 | 52.7 | — | 53.2 | 66.6 | 45.2 |
| 58.1 | 60.2 | — | 63.0 | 68.5 | 91.5 |
| | | Viscosity increased | | | |

Table 3-3

| | Ex.-11 | Ex.-12 | Ex.-13 | Ex.-14 | Ex.-15 | Ex.-16 |
|---|---|---|---|---|---|---|
| Graftcopolymer (I) No. | D-1 | D-1 | D-2 | D-2 | D-1 | D-1 |
| Content of acrylonitrile unit (% by mole) | 53.8 | 53.8 | 58.0 | 58.0 | 53.8 | 53.8 |
| Copolymer (II) No. | E-1 | E-3 | E-4 | E-5 | E-1 | E-1 |
| Content of acrylonitrile unit (% by mole) | 54.5 | 54.6 | 59.0 | 59.2 | 54.5 | 54.5 |
| Amt. of rubbery in resin composition (parts) | 18 | 18 | 18 | 18 | 12 | 24 |
| Av. acrylonitrile unit content in acetone-soluble fraction (% by mole) | 54.0 | 53.6 | 58.5 | 58.5 | 54.5 | 53.5 |
| Proportion of (M) ± 2.5% fraction (%) | 70.5 | 76.8 | 70.5 | 75.0 | 71.8 | 70.0 |
| Melt flow rate (JIS K7210) | 5.2 | 6.8 | 4.6 | 5.1 | 8.5 | 3.3 |
| Izod impact strength (ASTM D256) | 12.2 | 11.7 | 12.6 | 12.0 | 9.5 | 15.1 |
| Heat distortion temp. (ASTM D648) | 101.5 | 101.3 | 100.2 | 100.1 | 102.7 | 98.3 |
| Absorption of coating material* | − | − | − | − | − | − |
| Gloss vividness of coating (%) | 67.7 | 81.0 | 70.3 | 84.5 | 70.5 | 65.5 |
| Overall evaluation | ○ | ○ | ○ | ○ | ○ | ○ |

Ex  :  Example        *  −:  No absorption noticeable
Comp:  Comparative Example        +:  Absorption noticeable

EP 0 372 978 B1

Table 3-3 (Cont'd)

| | Comp.-9 | Comp.-10 | Comp.-11 | Comp.-12 | Comp.-13 | Comp.-14 | Comp.-15 | Comp.-16 | Comp.-17 | Ex.-17 |
|---|---|---|---|---|---|---|---|---|---|---|
| | D-1 | D-1 | D-1 | D-1 | D-3 | D-4 | D-5 | D-6 | D-4 | D-7 |
| | 53.8 | 53.8 | 53.8 | 58.0 | 67.1 | 44.0 | 52.5 | 54.0 | 44.0 | 52.1 |
| | E-2 | E-6 | E-7 | E-9 | E-10 | E-11 | E-1 | E-1 | E-3 | E-1 |
| | 54.0 | 53.8 | 52.9 | 53.2 | 66.6 | 45.2 | 54.5 | 54.0 | 54.6 | 54.5 |
| | 18 | 18 | 18 | 18 | 18 | 18 | 18 | 18 | 18 | 18 |
| | 52.5 | 53.1 | 52.9 | 53.0 | 66.0 | 44.5 | 54.0 | 54.4 | 42.5 | 54.6 |
| | 60.3 | 60.1 | 62.1 | 64.5 | 65.4 | 87.7 | 70.9 | 72.0 | 72.0 | 75.3 |
| | 4.8 | 3.3 | 3.5 | 4.2 | 1.8 | 2.7 | 5.6 | 4.9 | 7.3 | 4.5 |
| | 13.1 | 7.0 | 10.5 | 11.3 | 11.5 | 10.1 | 6.5 | 5.3 | 9.5 | 11.8 |
| | 101.7 | 104.4 | 102.4 | 101.7 | 78.7 | 105.0 | 101.3 | 102.0 | 101.0 | 102.5 |
| | − | + | − | − | − | + | − | − | + | − |
| | 42.1 | 25.3 | 33.8 | 39.5 | 75.5 | 13.2 | 41.7 | 70.5 | 53.1 | 80.4 |
| | × | × | × | × | × | × | × | × | × | ○ |

EP 0 372 978 B1

Table 4

| | Exper-iment No. | Starting resin composition | Average acrylo-nitrile content in aceton-soluble fraction | Number of reslurry-ing treat-ments | Na+K (ppm) | Drying temp. (°C) | Saturated moisture absorption (ppm) |
|---|---|---|---|---|---|---|---|
| Comp-18 | F-1 | a-2 | 49.0 (mol%) | 0 | 150 | 80 / 90 | 8000 |
| Comp-19 | F-2 | a-1 | 56.4 (mol%) | 0 | 160 | 90 | 9600 |
| Ex-18 | F-3 | | | 1 | 114 | 80 / 90 | 10100 |
| Ex-19 | F-4 | | | 2 | 57 | 80 / 90 | 8600 |
| Comp-20 | F-5 | a-4 | 64.0 (mol%) | 0 | 167 | 90 | 13300 |
| Ex-20 | F-6 | | | 2 | 60 | 80 / 90 | 12000 |
| Ex-21 | F-7 | | | 3 | 26 | 80 / 90 | 10300 |
| Ex-22 | F-8 | (b-1)/(c-1) =42.5/57.5 | 56.0 (mol%) | 0 | 60 | 80 / 90 | 9000 |
| Ex-23 | F-9 | (b-3)/(c-3) (45/55) | 63.5 (mol%) | 0 | 65 | 80 / 90 | 12800 |

Ex  :  Example                      +  :  Noticeable
Comp:  Comparative Example    -  :  Unnoticeable
                                              /  :  Not measured

EP 0 372 978 B1

Table 4 (Cont'd)

| After drying for 2 hrs. | | | After drying for 4 hrs. | | After drying for 10 hrs. | |
|---|---|---|---|---|---|---|
| Moisture (ppm) | Flash | Absorption of coating material | Moisture (ppm) | Flash | Moisture (ppm) | Flash |
| 900 | − | + | | | | |
| 500 | − | + | | | | |
| 2900 | + | − | 1,900 | + | 1,250 | + |
| 2300 | + | − | 1,400 | + | 940 | − |
| 1500 | + | − | 880 | − | | |
| 1100 | + | − | 840 | − | | |
| 570 | − | − | | | | |
| 5000 | + | − | 3,100 | + | 1,700 | + |
| 3100 | + | − | 1,600 | + | 880 | − |
| 2200 | + | − | 940 | − | | |
| 1600 | + | − | 880 | − | | |
| 1000 | + | − | 540 | − | | |
| 1400 | + | − | 900 | − | | |
| 650 | − | − | | | | |
| 4000 | + | − | 2,300 | + | 910 | − |
| 2500 | + | − | 950 | − | | |

EP 0 372 978 B1

Table 5

| | Example 1 | Comparative Example 3 | Example 5 |
|---|---|---|---|
| Resin composition No. | a-1 | a-7 | (b-1)+(c-1) |
| Av. content of acrylonitrile (% by mole) | 56.5 | 55.3 | 56.0 |
| Proportion of (M) ± 2.5% fraction (%) | 78.5 | 65.5 | 97.0 |

The resin composition of this invention exhibits the following effects:

(1)The resin composition of this invention is excellent in flow property during processing and in impact resistance property, and it has an excellent appearance and coating performance.

(2)When used as a plating material, it forms a plating surface having a high gloss vividness, owing to its excellent chemical resistance property. The plating film is resistant to peeling when contacted with chemicals such as gasoline, brake oil, etc.

(3) It is resistant to the migration of vinyl chloride resin plasticizers such as dioctyl adipate and the like. Accordingly, it shows no decrease in strength, when used in an environment in which it would come into contact with vinyl cloride resin.

(4) Further, it is excellent in resistance to Freon gases used for foaming urethane resin. Accordingly, it is usable as a core material or skin material resistant to direct foaming of a urethane resin.

(5) In addition to chemical resistance, it also has a high light resistance. Thus, it is not susceptible to discoloration caused by light and exhibits a high retention of mechanical strength. Accordingly, the field to which ABS resin is applicable, can be broaden by its use.

**Claims**

1. A resin composition comprising graft copolymer (I) prepared by graft-copolymerizing a vinyl cyanide compound (A) and an aromatic vinyl compound (S) onto a rubbery polymer (B) and a copolymer (II) prepared by copolymerizing a vinyl cyanide compound (A) and an aromatic vinyl compound (S), wherein:

   (i) content of (B) in said resin composition is 5 to 50% by weight.
   (ii) average content (M) of vinyl cyanide compound in the acetone-soluble component (P) of said resin composition is 50 to 65% by mole,
   (iii) the difference of (M) between the average content of the vinyl cyanide compound unit in the AS component of graft copolymer (I) and the average vinyl cyanide compound unit content of copolymer (II) is at most 5% by mole; and
   (iv) in a composition distribution chart, at least 70% by weight of (P) exists in the range of (M) ± 2.5% by mole.

2. A resin composition according to Claim 1, wherein a part of the aromatic vinyl compound constituting (I) and/or (II) is replaced with an acrylic ester compound or a methacrylic ester compound.

3. A resin composition according to Claim 1, wherein said vinyl cyanide compound constituting (I) and/or (II) is acrylonitrile.

4. A resin composition according to Claim 1, wherein said aromatic vinyl compound constituting (I) and/or (II) is styrene.

5. The resin composition according to Claim 1, wherein a part or the whole of said aromatic vinyl compound constituting (I) and/or (II) is alpha-methylstyrene.

6. The resin composition according to Claim 2, wherein proportion of the acrylic ester or methacrylic ester replacing the aromatic vinyl compound is 5 to 50% by weight based on the quantity of aromatic vinyl compound before the replacement.

7. The resin composition according to Claim 2 or 6, wherein said ester is butyl ester.

8. The resin composition according to Claim 1, 2, 3, 4, 6 or 7, wherein said rubbery polymer (b) has a particle diameter of 0.2 to 0.4 micron.

9. The resin composition according to Claim 5, wherein said rubbery polymer (B) has a particle diameter of 0.1 to 0.2 micron.

10. The resin composition according to Claim 1, 2, 3, 4, 5, 6 or 9, wherein the sum quantity of sodium and potassium present in the resin composition is 150 ppm or less when (M) is 50% by mole and is 60 ppm or less when (M) is 65% by mole.

11. The resin composition according to Claim 7, wherein the sum quantity of sodium and potassium present in the resin composition is 150 ppm or less when (M) is 50% by mole and 60 ppm or less when (M) is 65% by mole.

12. The resin composition according to Claim 8, wherein the sum quantity of sodium and potassium present in the resin composition is 150 ppm or less when (m) is 50% by mole and 60 ppm or less when (M) is 65% by mole.

13. A coated molded article prepared by coating a resin composition of Claim 1, 2, 3, 4, 5, 6 or 9.

14. A coated molded article of the resin composition of Claim 7.

15. A coated molded article of the resin composition of Claim 8.

16. A coated molded article of the resin composition of Claim 10.

17. A coated molded article of the resin composition of Claim 11.

18. A coated molded article of the resin composition of Claim 12.

19. A process for producing graft-copolymer (I) comprising a vinyl cyanide compound (A) and an aromatic vinyl compound (S) grafted onto a rubbery polymer (B) as described in Claim 1, which process comprises charging the rubbery copolymer into a polymerization reactor in the form of a latex, and thereafter continuously adding and graft-copolymerizing onto a rubbery polymer (B) a monomer mixture comprising a vinyl cyanide compound (A) and an aromatic vinyl compound (S), while maintaining a graftcopolymerization rate of 90% or above during at least 3/4 of the period of the total addition time.

20. A process for preparing a resin composition having a sharp composition distribution such that at least 70% by weight of (P) exists in the range (M)±2.5% by mole in a composition distribution chart; the process comprising blending a graft-copolymer produced according to claim 19 with a copolymer of a vinyl cyanide compound and an aromatic vinyl compound; said copolymer having the difference of [M] between the average content of the vinyl cyanide compound unit in the graft copolymer produced according to Claim 19 and the average vinyl cyanide compound unit content of said copolymer being at most 5% by mole, and being produced by continuously feeding the monomer mixture with thorough mixing at a rate capable of discharging a quantity of polymer solution equal to a quantity of fed monomer mixture under a definite degree of the polymerization in such a manner that the solid content in the reaction system can be stabilized at a constant value.

21. A process for preparing a resin composition having a sharp composition distribution such that at least 70% by weight of (P) exists in the range (M)±2.5% by mole in a composition distribution chart; the process comprising blending a graft-copolymer produced according to Claim 19 with a terpolymer of a vinyl cyanide compound, an aromatic vinyl compound and a (meth)acrylic ester; said terpolymer having the difference of [M] between the average content of the vinyl cyanide compound unit in the graft copolymer produced according to Claim 19 and the average vinyl cyanide compound unit content of said terpolymer being at most 5% by mole, and being produced by continuously feeding the monomer mixture with thorough mixing at a rate capable of discharging a quantity of polymer solution equal to a quantity of fed monomer mixture under a definite degree of the polymerization in such a manner that the solid content in the reaction system can be stabilized at a constant value.

22. An emulsion polymerization process for producing a copolymer comprising a vinyl cyanide compound (A) and an aromatic vinyl compound (S) as described in Claim 1 wherein the aromatic vinyl compound is an alpha-methylstyrene and the process comprises forming a reaction mixture, comprised of a vinyl cyanide compound (A) and an alpha-methylstyrene monomer mixture and a mixed emulsifier consisting of a 3:7 to 7:3 mixture of potassium (or sodium) rosinate and potassium (or sodium) salt of alkenylsuccinic acid in an amount of the 1.5 to 3 parts by weight per 100 parts by weight of the total monomer mixture and continuously adding and reacting the reaction mixture, and maintaining a polymerization rate of 90% or above during at least 3/4 of the period of the total addition time.

23. A process for preparing a resin composition having a sharp composition distribution by blending a graft-copolymer produced according to Claim 19 with a copolymer produced according to Claim 22.

**Patentansprüche**

1. Harzzusammensetzung, enthaltend ein Pfropfcopolymeres (I), das durch Pfropfcopolymerisation einer Vinylcyanidverbindung (A) und einer aromatischen Vinylverbindung (S) auf einem kautschukartigen Polymeren (B) hergestellt wurde, und ein Copolymeres (II), das durch Copolymerisation einer Vinylcyanidverbindung (A) und einer aromatischen Vinylverbindung (S) hergestellt wurde, wobei

(i) der Gehalt an (B) in der Harzzusammensetzung 5 bis 50 Gew.-% beträgt,
(ii) der durchschnittliche Gehalt (M) der Vinylcyanidverbindung in dem acetonlöslichen Bestandteil (P) der Harzzusammensetzung 50 bis 65 Mol% beträgt,
(iii) die Differenz von (M) zwischen dem durchschnittlichen Gehalt der Einheiten der Vinylcyanidverbindung in dem AS-Bestandteil des Pfropfcopolymeren (I) und dem durchschnittlichen Gehalt an Einheiten der Vinylcyanidverbindung des Copolymeren (II) höchstens 5 Mol% beträgt, und

(iv) in einem Verteilungsdiagramm der Zusammensetzung mindestens 70 Gew.-% (P) im Bereich von (M) ± 2,5 Mol% vorhanden sind.

2. Harzzusammensetzung nach Anspruch 1, wobei ein Teil der (I) und/oder (II) aufbauenden vinylaromatischen Verbindung durch eine Acrylsäureesterverbindung oder ein Methacrylsäureesterverbindung ersetzt ist.

3. Harzzusammensetzung nach Anspruch 1, wobei die (I) und/oder (II) aufbauende Vinylcyanidverbindung Acrylnitril ist.

4. Harzzusammensetzung nach Anspruch 1, wobei die (I) und/oder (II) aufbauende aromatische Vinylverbindung Styrol ist.

5. Harzzusammensetzung nach Anspruch 1, wobei ein Teil oder die Gesamtheit der (I) und/oder (II) aufbauenden aromatischen Vinylverbindung $\alpha$-Methylstyrol ist.

6. Harzzusammensetzung nach Anspruch 2, wobei der Anteil des die aromatische Vinylverbindung ersetzenden Acrylsäureesters oder Methacrylsäureesters 5 bis 50 Gew.-%, bezogen auf die Menge der aromatischen Vinylverbindung vor dem Ersatz, beträgt.

7. Harzzusammensetzung nach Anspruch 2 oder 6, wobei der Ester Butylester ist.

8. Harzzusammensetzung nach Anspruch 1, 2, 3, 4, 6 oder 7, wobei das kautschukartige Polymere (B) einen Teilchendurchmesser von 0,2 bis 0,4 $\mu$m hat.

9. Harzzusammensetzung nach Anspruch 5, wobei das kautschukartige Polymere (B) einen Teilchendurchmesser von 0,1 bis 0,2 $\mu$m hat.

10. Harzzusammensetzung nach Anspruch 1, 2, 3, 4, 5, 6 oder 9, wobei die Gesamtmenge an in der Harzzusammensetzung vorhandenem Natrium und Kalium 150 ppm oder weniger ist, wenn (M) 50 Mol% beträgt, und 60 ppm oder weniger ist, wenn (M) 65 Mol% beträgt.

11. Harzzusammensetzung nach Anspruch 7, wobei die Gesamtmenge an in der Harzzusammensetzung vorhandenem Natrium und Kalium 150 ppm oder weniger ist, wenn (M) 50 Mol% beträgt, und 60 ppm oder weniger ist, wenn (M) 65 Mol% beträgt.

12. Harzzusammensetzung nach Anspruch 8, wobei die Gesamtmenge an in der Harzzusammensetzung vorhandenem Natrium und Kalium 150 ppm oder weniger ist, wenn (M) 50 Mol% beträgt, und 60 ppm oder weniger ist, wenn (M) 65 Mol% beträgt.

13. Beschichteter Formkörper, hergestellt durch Beschichten einer Harzzusammensetzung nach Anspruch 1, 2, 3, 4, 5, 6 oder 9.

14. Beschichteter Formkörper aus der Harzzusammensetzung nach Anspruch 7.

15. Beschichteter Formkörper aus der Harzzusammensetzung nach Anspruch 8.

16. Beschichteter Formkörper aus der Harzzusammensetzung nach Anspruch 10.

17. Beschichteter Formkörper aus der Harzzusammensetzung nach Anspruch 11.

18. Beschichteter Formkörper aus der Harzzusammensetzung nach Anspruch 12.

19. Verfahren zur Herstellung eines Pfropfcopolymeren (I), das eine Vinylcyanidverbindung (A) und eine aromatische Vinylverbindung (S), aufgepfropft auf ein kautschukartiges Polymeres (B) enthält, wie es in Anspruch 1 beschrieben ist, wobei das Verfahren das Einbringen des kautschukartigen Copolymeren in Form eines Latex in einen Polymerisationsreaktor und darauffolgende kontinuierliche Zugabe und Pfropfcopolymerisation eines Monomerengemisches, welches eine Vinylcyanidverbindung (A) und eine aromatische Vinylverbindung (S) umfaßt, auf das kautschukartige Polymere (B) umfaßt, wobei eine Pfropfcopolymerisationsrate von 90% oder darüber während des Zeitraums von mindestens 3/4 der gesamten Zugabezeit eingehalten wird.

20. Verfahren zur Herstellung einer Harzzusammensetzung mit schmaler Verteilung der Zusammensetzung, wobei mindestens 70 Gew.-% (P) im Bereich von (M) ± 2.5 Mol% in dem Verteilungsdiagramm der Zusammensetzung vorhanden sind, wobei das Verfahren umfaßt: das Vermischen eines gemäß Anspruch 19 hergestellten Pfropfcopolymeren mit einem Copolymeren einer Vinylcyanidverbindung und einer aromatischen Vinylverbindung, wobei das Copolymere eine Differenz von [M] zwischen dem durchschnittlichen Gehalt der Einheiten der Vinylcyanidverbindung in dem gemäß Anspruch 19 hergestellten Pfropfcopolymeren und dem durchschnittlichen Gehalt an Einheiten der Vinylcyanidverbindung des Copolymeren von höchstens 5 Mol% aufweist und hergestellt wird, indem das Monomerengemisch kontinuierlich unter gründlichem Mischen in einer solchen Rate zugeführt wird, die es ermöglicht, eine Menge der Polymerlösung abzuziehen, die gleich der Menge des zugeführten Monomerengemisches bei einem festgelegten Polymerisationsgrad ist, derart, daß der Feststoffgehalt in dem Reaktionssystem bei einem konstanten Wert stabil gehalten werden kann.

21. Verfahren zur Herstellung einer Harzzusammensetzung mit scharfer Verteilung der Zusammensetzung, wobei mindestens 70 Gew.-% (P) im Bereich von (M) ± 2,5 Mol% in dem Verteilungsdiagramm der Zusammensetzung vorhanden sind, wobei das Verfahren umfaßt: das Vermischen eines Pfropfcopolymeren, hergestellt nach Anspruch 19, mit einem Terpolymeren aus einer Vinylcyanidverbindung, einer aromatischen Vinylverbindung und einem (Meth)acrylsäureester, wobei das Terpolymere eine Dif-. ferenz [M] zwischen dem Durchschnittsgehalt an Einheiten der Vinylcyanidverbindung in dem nach Anspruch 19 hergestellten pfropfcopolymeren und dem durchschnittlichen Gehalt an Vinylcyanideinheiten in dem Terpolymeren von höchstens 5 Mol% aufweist, und hergestellt wurde, indem das Monomerengemisch unter gründlichen Mischen in einer solchen Rate kontinuierlich zugeführt wurde, die es ermöglicht, eine Menge der Polymerlösung abzuziehen, die gleich der Menge des zugeführten Monomerengemisches bei einem festgelegten Polymerisationsgrad ist, derart, daß der Feststoffgehalt in dem Reaktionssystem bei einem konstanten Wert stabil gehalten werden kann.

22. Emulsionspolymerisationsverfahren zur Herstellung eines eine Vinylcyanidverbindung (A) und eine aromatische Vinylverbindung (S) enthaltenden Copolymeren, das wie in Anspruch 1 beschrieben ist, wobei die aromatische Vinylverbindung ein α-Methylstyrol ist und das Verfahren umfaßt: Ausbilden eines Reaktionsgemisches, das aus einem Monomerengemisch aus einer Vinylcyanidverbindung (A) und einem α-Methylstyrol, und einem Emulgatorgemisch aus einem Gemisch des Kalium- (oder Natrium-) Salzes von Harzsäure und des Kalium- (oder Natrium-) Salzes einer Alkenylbernsteinsäure im Verhältnis von 3:7 bis 7:3 in einer Menge von 1,5 bis 3 Gewichtsteilen pro 100 Gewichtsteile des gesamten Monomerengemisches, besteht und kontinuierliches Zuführen und Umsetzen des Reaktionsgemisches, und Aufrechterhalten einer Polymerisationsrate von 90% oder darüber während eines Zeitraums von mindestens 3/4 der gesamten Zugabezeit.

23. Verfahren zur Herstellung einer Harzzusammensetzung mit schmaler Verteilung der Zusammensetzung durch Vermischen eines gemäß Anspruch 19 hergestellten Pfropfcopolymeren mit einem gemäß Anspruch 22 hergestellten Copolymeren.

**Revendications**

1. Composition de résine comprenant un copolymère (I) greffé préparé en copolymérisant avec greffage un composé de cyanure de vinyle (A) et un composé vinylique aromatique (S) sur un polymère (B) caoutchouteux et un copolymère (II) préparé en copolymérisant un composé de cyanure de vinyle (A) et un composé vinylique aromatique (S), dans laquelle :

(i) la teneur en (B) de la composition de résine est comprise entre 5 et 50 % en poids,
(ii) la teneur moyenne (M) du composé de cyanure de vinyle en le constituant (P) soluble dans la cétone de la composition de résine est comprise entre 50 et 65 % en mole,
(iii) la différence de (M) entre la teneur moyenne en le motif du composé de cyanure de vinyle du constituant AS du copolymère (I) greffé et la teneur moyenne en le motif du composé de cyanure de vinyle du copolymère (II) est au plus de 5 % en mole; et
(iv) dans un histogramme de composition, au moins 70 % en poids de P existent dans l'intervalle de (M) ± 2,5 % en mole.

2. Composition de résine suivant la revendication 1, dans laquelle une partie du composé vinylique aromatique constituant (I) et/ou (II) est remplacée par un ester acrylique ou par un ester méthacrylique.

3. Composition de résine suivant la revendication 1, dans laquelle le composé de cyanure de vinyle constituant (I) et/ou (II) est l'acrylonitrile.

4. Composition de résine suivant la revendication 1, dans laquelle le composé vinylique aromatique constituant (I) et/ou (II) est le styrène.

5. Composition de résine suivant la revendication 1, dans laquelle tout ou partie du composé vinylique aromatique constituant (I) et/ou (II) est l'alpha-méthylstyrène.

6. Composition de résine suivant la revendication 2, dans laquelle la proportion de l'acrylate ou du méthacrylate remplaçant le composé vinylique aromatique représente de 5 à 50 % en poids de la quantité du composé vinylique aromatique avant le remplacement.

7. Composition de résine suivant la revendication 2 ou 6, dans laquelle l'ester est l'ester butylique.

8. Composition de résine suivant la revendication 1, 2, 3, 4, 6 ou 7, dans laquelle le polymère (B) caoutchouteux a un diamètre de particules de 0,2 à 0,4 micron.

9. Composition de résine suivant la revendication 5, dans laquelle le polymère (B) caoutchouteux a un diamètre de particules de 0,1 à 0,2 micron.

10. Composition de résine suivant la revendication 1, 2, 3, 4, 5, 6 ou 9, dans laquelle la quantité totale de sodium et de potassium présents dans la composition de résine est de 150 ppm ou inférieure à 150 ppm quand (M) est 50 % en mole et est de 60 ppm ou inférieure à 60 ppm quand (M) est 65 % en mole.

11. Composition de résine suivant la revendication 7, dans laquelle la quantité totale de sodium et de potassium présents dans la composition de résine est de 150 ppm ou inférieure à 150 ppm quand (M) est 50 % en mole et de 60 ppm ou inférieure à 60 ppm quand (M) est 65 % en mole.

12. Composition de résine suivant la revendication 8, dans laquelle la quantité totale de sodium et de potassium présents dans la composition de résine est de 150 ppm ou inférieure à 150 ppm quand (M) est 50 % en mole et 60 ppm ou inférieure à 60 ppm quand (M) est 65 % en mole.

13. Objet moulé revêtu préparé en revêtant une composition de résine suivant la revendication 1, 2, 3, 4, 5, 6 ou 9.

14. Objet moulé revêtu en la composition de résine suivant la revendication 7.

15. Objet moulé revêtu en la composition de résine suivant la revendication 8.

16. Objet moulé revêtu en la composition de résine suivant la revendication 10.

17. Objet moulé revêtu en la composition de résine suivant la revendication 11.

18. Objet moulé revêtu en la composition de résine suivant la revendication 12.

19. Procédé de préparation d'un copolymère greffé (I) comprenant un composé de cyanure de vinyle (A) et un composé vinylique aromatique (S) greffés sur un polymère caoutchouteux (B) comme décrit à la revendication 1, ce procédé consistant à charger le copolymère caoutchouteux dans un réacteur de polymérisation sous la forme d'un latex, puis à ajouter en continu et à copolymériser par greffage sur un polymère caoutchouteux (B) un mélange de monomères comprenant un composé de cyanure de vinyle (A) et un composé vinylique aromatique (S), tout en maintenant un taux de copolymérisation avec greffage de 90 % ou supérieur à 90 % pendant au moins les 3/4 de la durée totale de l'addition.

20. Procédé de préparation d'une composition de résine ayant une répartition étroite de la composition telle qu'au moins 70 % en poids de (P) existe dans l'intervalle (M) ± 2,5 % en mole dans un histogramme de composition; le procédé consistant à mélanger un copolymère greffé préparé suivant la revendication 19 à un copolymère d'un composé de cyanure de vinyle et d'un composé vinylique aromatique, le copolymère ayant la différence de [M] entre la teneur moyenne en le motif de composé de cyanure de vinyle du copolymère greffé préparé suivant la revendication 19 et la teneur moyenne en le motif de composé de cyanure de vinyle du copolymère étant au plus de 5% en mole, et étant préparé en chargeant en continu le mélange de monomères tout en mélangeant bien à une vitesse apte à évacuer une quantité de solution de polymère égale à la quantité du mélange de monomères chargé à un degré défini de la polymérisation de façon que la teneur en matières solides du système réactionnel puisse être stabilisée à une valeur constante.

21. Procédé de préparation d'une composition de résine ayant une répartition étroite de composition telle qu'au moins 70 % en poids de (P) existe dans l'intervalle (M) ± 2,5 % en mole dans un histogramme de composition; le procédé consistant à mélanger un copolymère greffé préparé suivant la revendication 19 à un terpolymère d'un composé de cyanure de vinyle, d'un composé vinylique aromatique et d'un ester(méth)acrylique; le terpolymère ayant la différence de [M] entre la teneur moyenne en le motif de composé de cyanure de vinyle du copolymère greffé préparé suivant la revendication 19 et la teneur moyenne en le motif de composé de cyanure de vinyle du terpolymère d'au plus de 5 % en mole, et étant préparé en chargeant en continu le mélange de monomères tout en mélangeant bien à une vitesse apte à évacuer une quantité de solution de polymère égale à la quantité du mélange de monomères chargé à un degré défini de la polymérisation de façon que la teneur en matières solides du système réactionnel puisse être stabilisée à une valeur constante.

22. Procédé de polymérisation en émulsion pour préparer un copolymère comprenant un composé de cyanure de vinyle (A) et un composé vinylique aromatique (S) comme décrit à la revendication 1, dans lequel le composé vinylique aromatique est un alpha-méthylstyrène et le procédé consiste à former un mélange réactionnel consistant en un mélange de monomères de composé de cyanure de vinyle (A) et d'un alpha-méthylstyrène et d'un émulsionnant mixte consistant en un mélange de 3:7 à 7:3 de résinat de potassium (ou de sodium) et de sel de potassium (ou de sodium) d'un acide alcénylsuccinique en une quantité de 1,5 à 3 parties en poids pour 100 parties en poids du mélange total de monomères et à ajouter continuellement et à faire réagir le mélange réactionnel et à maintenir un degré de polymérisation de 90 % ou supérieur à 90 % pendant au moins les 3/4 de la durée totale de l'addition.

23. Procédé de préparation d'une composition de résine ayant une répartition étroite de composition en mélangeant un copolymère greffé préparé suivant la revendication 19 à un copolymère préparé suivant la revendication 22.

# F I G. I

SUM QUANTITY OF SODIUM AND POTASSIUM

AVERAGE VINYL CYANIDE COMPOUND CONTENT
OF ACETONE-SOLUBLE FRACTION ( % BY MOLE )

FIG. 2

COMPOSITION DISTRIBUTION OF ACETONE-SOLUBLE
FRACTION IN RESIN COMPOSITION